# EUROPEAN PATENT APPLICATION

(11) **EP 2 487 969 A1**
(43) Date of publication of application: **15.08.2012**
(21) Application number: 12154986.9
(22) Date of filing: 10.02.2012
(51) Int. Cl.: H04W 52/36, H04L 12/28, H04N 21/442

(54) **Methods and apparatus for managing peak loads for a customer location**

(30) Priority: 11.02.2011 US 201113026192
(71) Applicant: General Electric Company, Schenectady, New York 12345 (US)
(72) Inventor: Ree, Bradley Richard, Cumming, GA Georgia 30028 (US)
(74) Representative: Cleary, Fidelma

(57) **Abstract**

Methods (300) and apparatuses may be provided for managing peak loads for a customer location. The methods (300) and apparatuses may include receiving an allocation request from at least a first home device of the one or more home devices (111a-n, 112a-n, 113a-n, or 114a-n), the allocation request requesting a power allocation amount by the first home device; determining a current remaining power budget amount of a total power budget amount; determining an extent to which the allocation request can be satisfied based at least in part upon a comparison of the requested power allocation amount by the current remaining power budget amount; and delivering a response to the first home device, the response indicating the extent to which the first home device is permitted to access the requested power allocation.

## Description

### FIELD OF THE INVENTION

Embodiments of the invention relate generally to peak load management, and more particularly, to methods and apparatuses for managing peak loads for a customer location such as a home.

### BACKGROUND OF THE INVENTION

Customers at some locations are charged based at least in part on peak loads. For example, a customer may be charged a higher price for exceeding a particular peak load. Likewise, the customer may be charged a higher price for exceeding a particular peak load during certain hours, and a lower price for exceeding a particular peak load at other hours. Accordingly, there is an opportunity for methods and apparatuses for managing peak loads for a customer location such as a home.

### BRIEF DESCRIPTION OF THE INVENTION

Some or all of the above needs and/or problems may be addressed by certain embodiments of the invention. Embodiments of the invention may include methods and apparatuses for managing peak loads for a customer location. According to one aspect, the invention resides in a method including providing, for a utility meter or a managing home device in communication with the utility meter, at least one communications interface for communicating with a home area network (HAN) that includes one or more home devices; receiving, by the utility meter or the managing home device via the at least one communications interface, an allocation request from at least a first home device of the one or more home devices, the allocation request requesting a power allocation amount by the first home device; determining, by the utility meter or the managing home device, a current remaining power budget amount of a total power budget amount; determining, by the utility meter or the managing home device, an extent to which the allocation request can be satisfied based at least in part upon a comparison of the requested power allocation amount by the current remaining power budget amount; and delivering, by the utility meter or the managing home device via the at least one communications interface, a response to the first home device, the response indicating the extent to which the first home device is permitted to access the requested power allocation.

According to another aspect, the invention resides in an apparatus including at least one communications interface for communicating with a home area network (HAN) that includes one or more home devices, and at least one processor in communication with the at least one communications interface. The at least one processor may be configured to: receive an allocation request from at least a first home device of the one or more home devices, the allocation request requesting a power allocation amount by the first home device; determine a current remaining power budget amount of a total power budget amount; determine an extent to which the allocation request can be satisfied based at least in part upon a comparison of the requested power allocation amount by the current remaining power budget amount; and deliver a response to the first home device, the response indicating the extent to which the first home device is permitted to access the requested power allocation.

Additional systems, methods, apparatus, features, and aspects are realized through the techniques of various embodiments of the invention. Other embodiments and aspects of the invention are described in detail herein and are considered a part of the claimed invention. Other embodiments and aspects can be understood with reference to the description and the drawings.

### BRIEF DESCRIPTION OF THE DRAWINGS

Embodiments of the present invention will now be described, by way of example only, with reference to the accompanying drawings in which:
FIG. 1 is a block diagram of one example monitoring system that supports management of peak loads for a customer location, according to an illustrative embodiment of the invention.
FIG. 2 illustrates an example utility meter, according to an example embodiment of the invention.
FIG. 3 is a flow diagram illustrating an example method for managing peak loads for a customer location such as a home, according to an example embodiment of the invention.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are methods and apparatuses for managing peak loads for a customer location such as a home. In an example embodiment of the invention, a smart utility meter may be in communication with one or more network devices (e.g., home devices) via a home area network or local area network using wired or wireless communications, as described herein. The smart utility meter may manage a total power budget amount. In this regard, the smart utility meter may receive a reservation / allocation request from one or more home devices, and if sufficient budget is available according to a current remaining power allocation amount or a currently allotted power amount, then the reservation / allocation request can be approved, and the one or more home devices can operate and utilize the requested power allocation amount. Likewise, when the smart utility meter receives a release request, the smart utility meter can update the current remaining power allocation amount or a currently allotted power amount to make the released power allocation amounts available to other home devices. Furthermore, prioritizations may be available for reservation / allocation requests such that a request received from a higher-priority home device can result in pausing or stopping operation of a lower-priority home device. In addition, exceptions may also be available such that the total power budget amount can be exceeded when necessary.

Various embodiments of the invention may include one or more special purpose computers, systems, and/or particular machines that facilitate network communications with one or more smart utility meters and/or other network devices. A special purpose computer or particular machine may include a wide variety of different software modules as desired in various embodiments. As explained in greater detail below, in certain embodiments, these various software components may be utilized to facilitate communications between one or more network devices and one or more smart utility meters. Additionally, these various software components may be utilized to support the management of peak loads for a customer location such as a home.

Certain embodiments of the invention described herein may have the technical effect of a utility meter managing or allocating a total power supply budget. For example, as one or more home devices reserve or release a power allocation amount, a remaining power budget amount or currently allotted power amount can be updated. As another example, the operation of one or more lower-priority devices can be stopped or paused in favor of one or more higher-priority home devices.

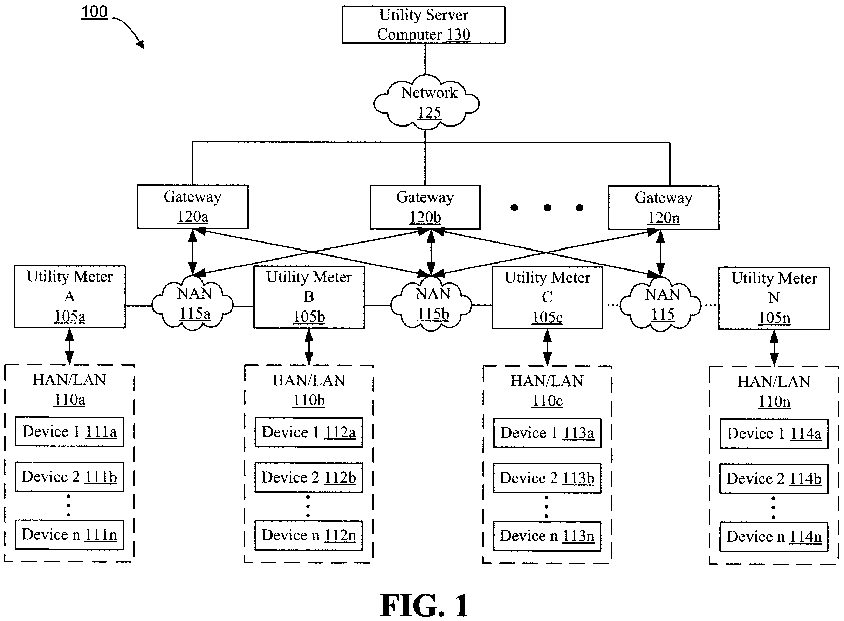

FIG. 1 is a block diagram of one example monitoring system 100 that supports management of peak loads for a customer location, according to an illustrative embodiment of the invention. The system 100 illustrated in FIG. 1 may include a plurality of smart utility meters 105a-n, according to an example embodiment of the invention. Each smart utility meter 105a-n may be in communication with one or more home area networks (HANs) or local area networks (LANs) 110a-n using wired communications (e.g., power line carrier communications, serial communications link, USB, Ethernet, fiber optic, etc.) or wireless communications (e.g., Zigbee, Global System for Mobile Communications (GSM), Wi-Fi, Worldwide Interoperability for Microwave Access (WiMAX), General Packet Radio Service (GPRS), Bluetooth, cellular, 3G, 4G, 802.11x, radio frequency (RF) mesh communications, etc.). Where a LAN is associated with one or more customer homes, the LAN may be referred to as a HAN. For convenience, the example HAN / LAN 110a-n described herein will be understood to encompass either or both a HAN or a LAN.

Each HAN / LAN 110a-n may include or be in communication with one or more network devices, which may include one or more home devices such as lights, appliances (e.g., refrigerator, stove, oven, dishwasher, clothes washer, clothes dryer, coffee maker, etc.), televisions, security systems, air conditioning and/or heating units, home Internet modems and routers, and the like, according to an example embodiment of the invention. For example, utility meter 105a can communicate with one or more network devices 111a-n via HAN / LAN 110a. Likewise, utility meter 105b can communicate with one or more network devices 112a-n via HAN / LAN 110b. Utility meter 105c can communicate with one or more network devices 113a-n via HAN / LAN 110c. Similarly, utility meter 105n can communicate with one or more network devices 114a-n via HAN / LAN 110n. It will be appreciated that one or more of the network devices 111a-n, 112a-n, 113a-n, 114a-n may receive a metered commodity (e.g., electricity, water, gas, etc.) via a respective utility meter 105a-n.

In addition, each smart utility meter 105a-n may be in further communication with one or more neighborhood area networks (NANs) 115a-n via wired or wireless communications similar to those described herein. These NANs 115a-n may provide further connectivity to other NANs and wide area networks (WANs) 125 (e.g., the Internet, a cellular network, a satellite-based network, etc.) via one or more gateway computers 120a-n. These NANs 115a-n and/or WANs 125 can enable communications between or among utility meters 105a-n, utility server computers 130, and/or one or more other computers associated with a utility company. It will be appreciated that the NANs 115 and/or WANS 125 can be provided or accessed via wired and/or wireless communications, and collectively create an interconnected network. For example, a utility meter 105a-n can communicate with a utility server computer 130 via a gateway computer 120a-n and/or a WAN 125. It will be appreciated that in some example embodiments, the WAN 125, gateway computers 120a-n, and the NANs 115a-n may be part of a same network such as the Internet. In an example embodiment of the invention, the utility meter 105a-n may also be in communication with a WAN 125 or other yet networks without an intermediate NAN 115a-n.

Many different communication paths between network devices may be available via the various combinations of HANs / LANs 110a-n, NANs 115a-n, gateway computers 120a-n, and WAN 125. For example, utility server computer 130 or other computers / processors associated with the utility company or another entity may communicate with various utility meters 105a-n through direct or indirect routes involving various combinations of WAN 125, gateway computers 120a-n, and other utility meters 105an. For example, utility server computer 130 could communicate with utility meter 105b, HAN / LAN 110b, and/or any devices 112a-n associated with HAN / LAN 110b using any combination of WAN 125, gateway computers 120a-n, and any other utility meters 105a, 105c, and/or 105n. Accordingly, in some example embodiments of the invention, utility meters 105a-n and HANs / LANs 110a-n can communicate with other network devices in performing certain routing or retransmission functionality, according to an example embodiment of the invention.

A utility meter 105a-n may be any suitable utility meter that may be connected to a commodity metering and distribution system, such as an electrical meter connected to a power distribution grid that includes any number of power lines. A wide variety of suitable electrical meters may be utilized as desired in various embodiments, such as a single-phase meter or a three-phase meter. A utility meter 105a-n may be configured to measure an amount of electrical energy (e.g., kilowatt hours, etc.) or electrical power that is supplied to an associated location, residence, business, household, or machine. In an alternative embodiment of the invention, the utility meter 105 can also be associated with the metering and distribution of commodities other than electricity such as water, gas, and the like. Thus, the utility meter 105a-n may be configured to meter and supply or distribute commodities to an associated location, residence, business, household, or machine, including an associated network device 111a-n, 112a-n, 113a-n, 114a-n.

In certain embodiments, the utility meter 105a-n may be a smart meter or an advanced meter that is configured to identify commodity consumption in relatively greater detail than a conventional meter. For example, a smart utility meter 105a-n may facilitate real-time or near real-time readings, commodity outage notifications, and/or commodity quality monitoring. Additionally, as desired, a smart utility meter 105a-n may communicate measurements data, calculations, and/or other information to one or more recipients, such as a utility server computer 130 of a utility company or a smart meter data processing system. Furthermore, as described herein, a smart utility meter 105a-n may be configured to support managing peak loads for a customer location, including allocation, release, reservation, and/or prioritization of power to one or more devices 111a-n, 112a-n, 113a-n, or 114a-n, according to an example embodiment of the invention.

As desired, embodiments of the invention may include a system 100 with more or less than the components illustrated in FIG. 1. Additionally, certain components of the system 100 may be combined or omitted in various embodiments of the invention. The system 100 of FIG. 1 is provided by way of example only, as appreciated by those of ordinary skill in the art.

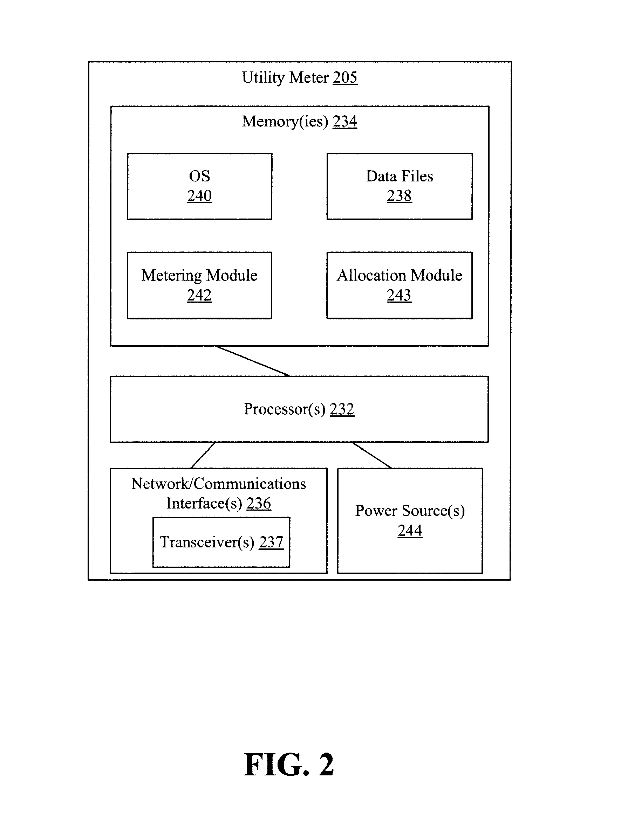

FIG. 2 illustrates an example utility meter 205, according to an example embodiment of the invention. The utility meter 205 of FIG. 2 may be an example implementation for any one of the utility meters 105a-n of FIG. 1. As shown in FIG. 2, an example utility meter 205 may include any number of suitable computer processing components that facilitate the operation of the utility meter and/or the provision of a utility service and/or commodity (e.g., electricity, water, gas, etc.) to a location, including a customer home location. Examples of suitable processing devices that may be incorporated into a utility meter 205 include, but are not limited to, application specific circuits, microcontrollers, minicomputers, other computing devices, and the like. As such, a utility meter 205 may include any number of processors 232 that facilitate the execution of computer-readable instructions. By executing computer-readable instructions, the utility meter 205 may include or form a special purpose computer or particular machine that facilitates the provision of a utility service and/or the provision of a commodity to a location.

In addition to one or more processors 232, the utility meter 205 may include one or more memory devices 234 and/or one or more network and/or communications interfaces 236. The one or more memory devices 234 or memories may include any suitable memory devices, for example, caches, read-only memory devices, random access memory devices, magnetic storage devices, etc. The one or more memory devices 234 may store data, executable instructions, and/or various program modules utilized by the utility meter 205, for example, data files 238, an operating system ("OS") 240, a metering module 242, and/or an allocation module 243. The data files 238 may include, for example, stored data associated with the operation of a utility meter 205, stored data associated with measurements and/or readings taken by the utility meter 205, utility meter configuration information, stored messages and/or alerts, and/or stored commodity management, usage, and/or distribution data. The data files 238 can further information supporting the management of peak loads for one or more devices or appliances at a customer location such as a home. For example, the data files 238 can maintain peak power usage or other power usage for one or more home devices that are connected or in communication with the utility meter 205, such as any of devices 111a-n, 112a-n, 113a-n, or 114a-n. Likewise, the data files 238 can further maintain a total power supply budget and/or a remaining power budget amount for purposes of managing peak loads. As an example, the total power supply budget and/or remaining power budget amount may be obtained and/or updated to reflect reservation or release of power by one or more home devices, thereby supporting the management of peak loads for a customer location, according to an example embodiment of the invention.

The OS 240 may include executable instructions and/or program modules that facilitate and/or control the general operation of the utility meter 205. For example, the OS 240 may facilitate the execution of other software programs and/or program modules by the processors 232. The metering module 242 may be configured to determine and record, perhaps in data files 238 or other data storage, commodity usage or distribution to an associated location, residence, business, household, or machine, including an associated network device 111a-n, 112a-n, 113a-n, 114a-n. The allocation module 243 may be configured to receive and respond to power allocation and power release requests from one or more home devices, or support the management of peak loads for a customer location.

The one or more network interfaces 236 associated with the utility meter 205 can include a HAN / LAN interface and a NAN interface. The LAN interface can be used for communicating or connecting with one or more HANs / LANs such as HANs / LANs 110a-n of FIG. 1, and the NAN interface can be used for communicating or connecting with one or more NANs such as NANs 115a-n of FIG. 1. In this regard, a utility meter 205 may receive data from and/or communicate data to other components of the system 100. The one or more network interfaces 236, including the HAN / LAN interface and/or the NAN interface, can be implemented as one or more network cards, adaptors, or transceivers 237 for communicating over wired interfaces (e.g., power line carrier communications, serial communications link, USB, Ethernet, fiber optic, etc.) and/or wireless interfaces (e.g., ZigBee, GSM, Wi-Fi, WiMAX, Bluetooth, GRPS, cellular, 3G, 4G, 802.11x, RF mesh communications, etc.). It will be appreciated that the one or more network interfaces 236 can also be utilized for communicating or connecting with one or more other network devices or networks, including WAN 125 of FIG. 1, without departing from example embodiments of the invention.

The utility meter 205 may typically receive a commodity from a connected commodity line, grid and/or source, and likewise meter and distribute the commodity to an associated location, residence, business, household, or machine, including an associated network device 111a-n, 112a-n, 113a-n, 114a-n. Additionally, as desired in certain embodiments, the utility meter 205 may include any number of suitable power sources 244, which can include wired power supplies and solar power cells, as well as back-up power supplies such as one or more batteries, fuel cells, or one or more super capacitors.

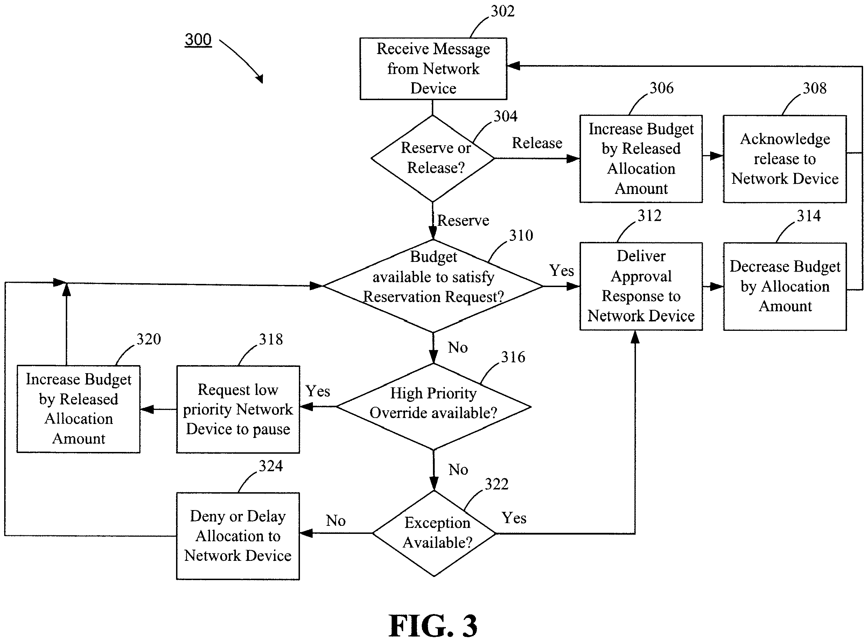

FIG. 3 is a flow diagram illustrating an example method 300 for managing peak loads for a customer location such as a home, according to an example embodiment of the invention. In certain embodiments, the operations of the method 300 may be performed by the example utility meter 205 of FIG. 2. For example, the operations of the method 300 may be implemented as computer-executable instructions stored in data files 238 and executed by an allocation module 243, according to an example embodiment of the invention. Because the example utility meter 205 of FIG. 2 is representative of any of the utility meters 105a-n of FIG. 1, it will be appreciated that the operations of the method 300 of FIG. 3 can likewise be performed by any of the utility meters 105a-n. For illustrative purposes, the method 300 of FIG. 3 will be discussed as being performed by the example utility meter 105a. The example utility meter 105a may be in communication with one or more network devices 111a-n that may be located in, near, or around a customer home, and may be referred to as a home device. These network devices 111a-n may include lights, appliances (e.g., refrigerator, stove, oven, dishwasher, clothes washer, clothes dryer, coffee maker, etc.), televisions, security systems, air conditioning and/or heating units, home Internet modems and routers. It will be appreciated that network devices 111a-n can also be located outside of a customer home or location without departing from example embodiments of the invention. It will further be appreciated that the example method 300 may likewise be performed by any of utility meters 105b-n without departing from example embodiments of the invention.

At block 302, a utility meter 105a may receive, perhaps via at least one communications interface (e.g., interface 236) and HAN / LAN 110a, a message from a home device such as one of network devices 111a-n. As an example, the message may be in the form of a request such as an allocation / reservation request or a release request. An allocation / reservation request may request a power allocation amount by a home device that wishes to start or resume operations. On the other hand, a release request may indicate that a home device no longer requires the previously allotted power allocation amount.

It will be appreciated that an allocation / reservation request may be received at block 302 from a home device in response to a starting, resuming, pausing, or a stopping of an operation or cycle of the home device. For example, the allocation / reservation request can be generated and delivered from a dishwasher or other home device that is started or resumed by a user. In an example embodiment, the an allocation / reservation request may be received from a home device when there is a change in power requirements, perhaps in accordance with different operations or cycles of a home device. For example, a first allocation / reservation request can be generated and delivered from a dishwasher at the beginning of a wash/rinse cycle when a motor of the dishwasher needs to run. On the other hand, a second allocation / reservation request can be generated and delivered from the dishwasher at the end of the wash/rinse cycle or beginning of a drying cycle when a heating coil of the dishwasher needs to run.

Following block 302 is block 304. Block 304 may determine whether the received message at block 302 is an allocation / reservation request or a release request. If block 304 determines that the received message is a release request, then a home device no longer requires the previously allotted power allocation amount, and processing may proceed to block 306. At block 306, the utility meter 105a may update its records, perhaps in data files 238 or another data storage, to reflect an increase to the current remaining power budget amount. For example, the current remaining power budget amount may be updated to reflect the release of the previously requested and allotted power allocation by the home device. It will be appreciated that the current remaining power budget amount is the amount of power that is available for allocating to one or more home devices, according to an example embodiment of the invention. Generally, the current remaining power budget amount may be equal to a total power budget amount where no home devices have been allocated any power budget amounts. Likewise, the current remaining power budget amount may be less than the total power budget amount where one or more home devices have been allocated a respective power budget amount. The difference between the current remaining power budget amount and the total power budget amount is typically the aggregate power budget amount that is currently allocated to one or more home devices. It will be appreciated that the current remaining power budget amount and the total power budget amount may be expressed as one or both of (i) a peak power, or (ii) an average power, according to an example embodiment of the invention. It will be appreciated that the total power budget amount may be (i) set locally at the meter, or (ii) received remotely from a utility server computer 130 of the utility provider. Where the total power budget amount is set locally at the utility meter 105a, it may be a default value or a customized value set by a customer, perhaps communicating with the meter 105a via a programming device over HAN / LAN 110a. Where the total power budget amount is received remotely from a utility server computer 130, this value may be a default value set by a utility provider or perhaps set by a customer communicating with the server computer 130 via a WAN 125 (e.g., the Internet) using a customer computer.

It will also be appreciated that while a current remaining power budget amount will be discussed with respect to FIG. 3, the currently allotted power amount can also be maintained by the utility meter 105a. In this regard, as the allocation / reservation requests are approved, the currently allotted power amount may be increased. Likewise, as release requests are received, the currently allotted power amount may be decreased. In an example embodiment of the invention, the current remaining power budget amount can be obtained by simply subtracting the currently allotted power amount from the total power supply budget. Accordingly, the currently allotted power amount can be utilized instead of the current remaining power budget amount without departing from example embodiments of the invention. If the currently allotted power amount is alternatively or additionally utilized in block 306, then the currently allotted power amount can be decreased to reflect the release of the previously requested and allotted power allocation by the home device.

Following block 306 is block 308. At block 308, the utility meter 105a may deliver or transmit, perhaps via at least one communications interface (e.g., interface 236) and HAN / LAN 110a, an acknowledgement response to the home device. The acknowledgement response may indicate that the release request has been successfully processed by the utility meter 105a. The acknowledgement response may further prevent or disable the home device from drawing any substantial power until a subsequent allocation / reservation request is received by the home device.

On the other hand, if block 304 determines that the received message at block 302 is an allocation / reservation request, then the home device is requesting a power allocation amount, and processing may proceed to block 310. The allocation / reservation request may identify one or more of the following: (i) a priority (e.g., high priority, medium priority, low priority, etc.) for the request, (ii) the requested power allocation amount, and/or (iii) a time period or amount for which the requested power allocation amount is needed.

At block 310, the utility meter 105a may determine whether there is available budget to satisfy the requested power allocation amount of the allocation / reservation request. To do so, block 310 may obtain or determine, perhaps from records stored in data files 238 or other data storage, a current remaining power budget amount of a total power budget amount. Block 310 may then perform at least a comparison of the requested power allocation amount to the current remaining budget amount to determine whether the allocation / reservation request can be satisfied. For example, if the current remaining budget amount is greater than or equal to the requested power allocation amount, then a determination may be made at block 310 that there is sufficient budget available to satisfy the requested power allocation amount, and processing may proceed to block 312. If the currently allotted power amount is alternatively or additionally utilized at block 310, then there may be sufficient budget available to satisfy the requested power allocation amount when the currently allotted power amount is less than the total power budget amount.

At block 312, the utility meter 105a may deliver or transmit, perhaps via at least one communications interface (e.g., interface 236) and HAN / LAN 110a, a response to the home device indicating that the home device is permitted to access the requested power allocation. As such, the response may enable the home device to operate and draw the requested power allocation. Optionally, the response may also indicate the time period or amount for which the requested power allocation amount has been reserved for. Following block 312 is block 314. At block 314, the utility meter 105a may update its records, perhaps in data files 238 or another data storage, to reflect a decrease to the current remaining power budget amount. For example, the current remaining power budget amount may be updated to reflect the allocation or allotment of the requested power allocation amount to the home device. Generally, the current remaining power budget amount may be decreased by the allotted power allocation amount, according to an example embodiment of the invention. If the currently allotted power amount is alternatively or additionally utilized at block 314, then the currently allotted power amount can be increased to reflect the allocation or allotment of the requested power allocation amount to the home device.

On the other hand, block 310 may determine that there is not sufficient budget to satisfy the requested power allocation amount of the allocation / reservation request. For example, the remaining budget amount may be less than the requested power allocation amount. Accordingly, in this case, processing may proceed from block 310 to block 316.

Block 316 may determine whether a high-priority override is available to stop or pause another home device to increase the current remaining power budget amount. In an example embodiment of the invention, a high-priority override may be available where (i) the requesting home device is determined to be high priority, and (ii) one or more lower-priority home devices are currently allotted respective power allocation amounts, and the lower-priority home devices can be paused or otherwise stopped to increase the current remaining power budget amount. The priorities of the home devices may be specified by the allocation / reservation requests received from the home devices.

For example, a furnace or air conditioner may indicate a high priority when requesting a power allocation amount in an allocation / reservation request. Likewise, a dishwasher or a clothes washer / dryer may indicate a lower priority when requesting a power allocation amount in a respective allocation / reservation request. Accordingly, the utility meter 105a can determine whether any lower priority devices can be paused or stopped at block 316. Alternatively, the utility meter 105a may have one or more pre-defmed records in data files 238 or other data storage indicating the priorities of the one or more home devices. These pre-defined records for a utility meter 105a may be default settings or may be customized by a customer. For example, a customer can customize the pre-defined records by communicating priority preferences over HAN / LAN 110a to the utility meter 105a via a home programming device (e.g., handheld device or personal computer). Alternatively, the customer can also communicate priority preferences to a utility server computer 130, perhaps via WAN 125 (e.g., the Internet), and the utility server can deliver the priority preferences to utility meter 105a via one or more gateways 120a-n or NANs 115a-n. As another variation, these priority preferences can also be set by another entity such as a utility company. Many other variations of providing pre-defined records to the utility meter 105a are available without departing from example embodiments of the invention. As such, when the utility meter 105a receives an allocation / reservation request from a home device, it can determine the associated priority from the one or more pre-defined records.

If block 316 determines that a high-priority override is available to stop or pause another home device, then processing may proceed to block 318. At block 318, the utility meter 105a may identify the lower priority device that will be paused. It will be appreciated that in many instances, the utility meter 105a may have a choice of several lower-priority home devices to pause or stop, and one of ordinary skill in the art will recognize that many algorithms are available to determine which one(s) of the lower-priority home devices to pause or stop. Below are several example algorithms for determining the one or more lower-priority devices to pause or stop:
Pre-defined Ordering: An ordering set by default, by a utility company, or by a customer for utility meter 105a that indicates the order in which lower-priority home devices are to be stopped first.
Random: A lower-priority home device is selected at random.
Highest Power Allocation Amount First: A lower-priority home device with the greatest power allocation amount is selected first.
Lowest Power Allocation Amount First: A lower-priority home device with the lowest power allocation amount is selected first.
Median Power Allocation Amount First: A lower-priority home device with the median power allocation amount is selected first. Where there are two or more lower-priority home devices at the median, one of the two or more lower-priority home devices can be selected at random or based upon a pre-defined preference.
Deficiency-Based: A deficiency amount can be calculated as a difference between the current remaining power budget amount and the requested power allocation amount by the high-priority home device. The deficiency amount can be used to determine which lower-priority home device to stop. For example, a lower-priority device having at least an allotted power allocation amount meeting the deficiency can be selected.
Cycle-based: A lower-priority device in part of a cycle that is convenient to stop or pause may be selected. For example, a dishwasher nearing the end of a rinse cycle and a dry cycle may be conveniently positioned to be stopped or paused. Alternatively, a clothes washer nearing the end of a agitate / wash cycle and the beginning of a rinse cycle may be conveniently positioned to be stopped or paused.

At block 318, the utility meter 105a may deliver or transmit, perhaps via at least one communications interface (e.g., interface 236) and HAN / LAN 110a, a stop or pause request to the selected lower-priority home device. The stop or pause request may further prevent or disable the home device from drawing any substantial power for at least a time period. The stop or pause request may indicate the amount of time that the lower-priority home device must remain stopped or paused. It will be appreciated that according to an example embodiment, a paused or stopped operation of a home device enables the paused or stopped second device to resume operation at a later time without a complete restart. According to an example embodiment, the stop or pause request may result in the utility meter 105a generating a second allocation / reservation request for the lower-priority device to be processed following the present request for the current higher-priority device. In addition, the utility meter 105a may increase the current priority of the lower-priority device to ensure that the second allocation / reservation request for the lower-priority device does not remain paused or stopped indefinitely based upon requests from higher-priority devices.

Following block 318 is block 320. At block 320, the utility meter 105a may update its records, perhaps in data files 238 or another data storage, to reflect an increase to the current remaining power budget amount. For example, the current remaining power budget amount may be updated to reflect the release of the previously requested and allotted power allocation by the stopped or paused lower-priority home device. If the currently allotted power amount is alternatively or additionally utilized at block 320, then the currently allotted power amount can be decreased to reflect the release of the previously requested and allotted power allocation by the stopped or paused lower-priority home device.

Following block 320, processing may return to block 310, where the utility meter 105a may again determine whether there is available budget to satisfy the requested power allocation amount of the allocation / reservation request for the high-priority home device. If there is sufficient budget at block 310, then processing may proceed to block 312 as described herein. On the other hand, if there is not sufficient budget, then processing may again proceed to block 316 to determine whether any other lower-priority devices can be paused or stopped.

On the other hand, block 316 may determine that there is not a high priority override available; for example, the requesting home device is not determined to be high priority, or there are no additional lower-priority devices that can be stopped or paused. In this case, processing may proceed to block 322. Block 322 may determine whether there is an exception available for the requesting home device. The exception may be needed because the current remaining power budget amount is not sufficient to meet the requested power allocation amount, and the granting of the requested power allocation amount may result in the customer being charged premium or higher rates for exceeding certain peak power thresholds. If there is no exception available, then processing may proceed to block 324, where the utility meter 105a may deliver or transmit, perhaps via at least one communications interface (e.g., interface 236) and HAN / LAN 110a, a response to the home device indicating a denial or delay of the requested power allocation amount. If a delay is indicated, the response can indicate the time period or amount of the delay before the requested power allocation will be made available to the home device. On the other hand, block 322 may determine that an exception is available for the home device, and processing may proceed to block 312, where an approval response is delivered to the home device, as previously discussed herein.

It will be appreciated that many methods are available to determine whether an exception is available in block 322. For example, the allocation / reservation request may indicate that an exception is available. For example, this exception may be based upon the included priority (e.g., "exception" priority) or a value in a particular field (e.g., Exception Field = "Yes") of the allocation / reservation request. Alternatively, the utility meter 105a may have one or more pre-defined records in data files 238 or other data storage indicating exceptions for one or more home devices. These pre-defined records for a utility meter 105a may be default settings or may be customized by a customer. For example, a customer can customize the pre-defined records by communicating exception preferences over HAN / LAN 110a to the utility meter 105a via a home programming device (e.g., handheld device or personal computer). Alternatively, the customer can also communicate exception preferences to a utility server computer 130, perhaps via WAN 125 (e.g., the Internet), and the utility server can deliver the priority preferences to utility meter 105a via one or more gateways 120a-n or NANs 115a-n.

In an example embodiment of the invention, the utility meter 105a may maintain an activity log that includes transactions and other activities involving one or more home devices, including the devices 111a-n in communication with the utility meter 105a via HAN / LAN 110a. The activity log may be maintained as part of data files 238 or another data storage accessible, either locally or remotely, by the utility meter 105a. The activity log can record allocation / reservation requests and release requests received from one or more home devices, along with the associated status of processing the received requests. Furthermore, the activity log can indicate which lower-priority home devices were paused or stopped, and the reason or identification of the higher-priority device that resulted in the pausing or stopping. A customer may be able to view or obtain the activity log by communicating with the utility meter 105a via HAN / LAN 110a, or via WAN 125 (e.g., the Internet). In some example embodiments of the invention, the utility server computer 130 may be a web server that allows the customer to view or search the activity log using an Internet-browser or another dedicated connection. By reviewing the activity log, the customer may be able to customize certain preferences or parameters such as the total power budget amount, the priority preferences, the exception preferences, and the like.

The operations described and shown in the method 300 of FIG. 3 may be carried out or performed in any suitable order as desired in various embodiments of the invention. Additionally, in certain embodiments, at least a portion of the operations may be combined or carried out in parallel. Furthermore, in certain embodiments, less than or more than the operations described in FIG. 3 may be performed. As desired, the operations set forth in the method 300 may be performed in a loop for continuous monitoring.

It will be appreciated that in alternative embodiments, one or more operations of the method 300 may be implemented by a managing home device (e.g., one of network devices 111a-n) in communication with an example utility meter. For example, the managing home device may receive the allocation / reservation requests or release requests from other home devices such as home devices 111a-n. The managing home device can then communicate with a utility meter such as utility meter 105a to determine or manage power budget amounts, as described in FIG. 3, and then return the appropriate response such as confirming, approving, or denying an allocation / reservation requests or release request, according to an example embodiment of the invention. The managing home device can be implemented in a home display, an energy service portal, or another access or configuration device, according to an example embodiment of the invention.

Many variations of the method 300 of FIG. 3 are available in accordance with alternative embodiments of the invention. According to one variation, a home device may receive a partial grant of the requested power allocation. For example, even if block 310 determines that there is not sufficient budget to satisfy the allocation / reservation request, the utility meter may still deliver or transmit, perhaps via at least one communications interface (e.g., interface 236) and HAN / LAN 110a, a response to the home device indicating that a partial grant of the requested power allocation is available. This response may enable the appliance to change its operation or mode of operation, or at least begin part of any operation, according to an example embodiment of the invention.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer-usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose the invention, including the best mode, and also to enable any person skilled in the art to practice the invention, including making and using any devices or systems and performing any incorporated methods. The patentable scope of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An apparatus, comprising:
at least one communications interface (236) for communicating with a home area network (HAN) that includes one or more home devices; and
at least one processor (232) in communication with the at least one communications interface (236), the at least one processor (232) configured to:
receive an allocation request from at least a first home device of the one or more home devices (111a-n, 112a-n, 113a-n, or 114a-n), the allocation request requesting a power allocation amount by the first home device;
determine a current remaining power budget amount of a total power budget amount;
determine an extent to which the allocation request can be satisfied based at least in part upon a comparison of the requested power allocation amount by the current remaining power budget amount; and
deliver a response to the first home device, the response indicating the extent to which the first home device is permitted to access the requested power allocation.

2. The apparatus of Claim 1, wherein the at least one processor (232) is further configured to:
determine whether the first home device is designated as high priority,
wherein the determination of whether the allocation request can be satisfied is further based in part on whether the first home device is designated as high priority.

3. The apparatus of Claim 2, wherein the first home device is designated as high priority, wherein prior to determining the current remaining power budget amount, the processor (232) is further configured to:
responsive to the determination that the first home device is designated as high priority, pause an operation of at least one second home device of the one or more home devices; and
update the current remaining power budget amount by a released power allocation amount from the paused operation of at least one of the one or more home devices.

4. The apparatus of Claim 3, wherein the updated current remaining power budget amount is sufficient for the requested power allocation, thereby resulting in the determination that the allocation request can be satisfied.

5. The apparatus of Claim 3, wherein the updated current remaining power budget amount remains insufficient for the requested power allocation, wherein the designation as high priority results in an override allowing the determination that the allocation request can be satisfied.

6. The apparatus of Claim 3, 4 or 5, wherein the paused operation of the at least one second home device enables the at least one second home device to resume operation at a later time without a complete restart.

7. The apparatus of Claim 3, 4 or 5 wherein the paused operation of the at least one second home device results in an increase in the respective priority of the at least one second home device.

8. The apparatus of any preceding Claim, wherein the current remaining power budget amount includes respective values of one or both of (i) a peak power, or (ii) an average power.

9. The apparatus of any preceding Claim, wherein the allocation request identifies an amount of time for utilizing the power allocation amount.

10. The apparatus of any preceding Claim, wherein the total power budget amount is (i) set locally at the meter, or (ii) received remotely from a server computer (130) of the utility provider.

11. A method for a utility meter, the method comprising:
providing, for a utility meter or a managing home device in communication with the utility meter, at least one communications interface (236) for communicating with a home area network (HAN) that includes one or more home devices (111an,112a-n,113a-n,114a-n);
receiving, by the utility meter or the managing home device via the at least one communications interface (236), an allocation request from at least a first home device of the one or more home devices (111a-n,112a-n,113a-n,114a-n), the allocation request requesting a power allocation amount by the first home device;
determining, by the utility meter or the managing home device, a current remaining power budget amount of a total power budget amount;
determining, by the utility meter or the managing home device, an extent to which the allocation request can be satisfied based at least in part upon a comparison of the requested power allocation amount by the current remaining power budget amount; and
delivering, by the utility meter or the managing home device via the at least one communications interface, a response to the first home device, the response indicating the extent to which the first home device is permitted to access the requested power allocation.

12. The method of Claim 11, further comprising:
determining, by the utility meter or the managing home device, whether the first home device is designated as high priority,
wherein the determination of whether the allocation request can be satisfied is further based in part on whether the first home device is designated as high priority.

13. The method of Claim 12, wherein the first home device is designated as high priority, wherein prior to determining the current remaining power budget amount, the method further includes:
responsive to the determination that the first home device is designated as high priority, pausing, by the utility meter or the managing home device, an operation of at least one second home device of the one or more home devices; and
updating, by the utility meter or the managing home device, the current remaining power budget amount by a released power allocation amount from the paused operation of at least one of the one or more home devices.

14. The method of any of Claims 11 to 13, wherein the response indicates that the first home device is permitted to access the requested power allocation, and further comprising:
updating, by the utility meter or the managing home device, the current remaining power budget amount to reflect the requested power allocation to the first home device.

15. The method of any of Claims 11 to 14, further comprising:
receiving, by the utility meter or the managing home device, a release request from at least the first home device, the release request indicating that the first home device no longer requests the requested power allocation amount; and
updating, by the utility meter or the managing home device, the current remaining power budget amount to reflect the release of the requested power allocation by the first home device.
